# EUROPÄISCHE PATENTANMELDUNG

(11) **EP 2 559 474 A1**
(43) Veröffentlichungstag der Anmeldung: **20.02.2013**
(21) Anmeldenummer: 12178948.1
(22) Anmeldetag: 02.08.2012
(51) Int. Cl.: B01D 53/30, B01D 53/86, G05D 21/02

(54) **Verfahren und Vorrichtung zur Reduzierung der Schadstoffmenge in Abgasen**

(30) Priorität: 19.08.2011 DE 102011081282
(71) Anmelder: SIEMENS AKTIENGESELLSCHAFT, 80333 München (DE); STEAG GmbH, 45128 Essen (DE)
(72) Erfinder: Endemann, Jürgen, 46514 Schermbeck (DE); Gadinger, Jörg, 90478 Nürnberg (DE)

(57) **Zusammenfassung**

Die Erfindung betrifft ein Verfahren bzw. eine Vorrichtung zur Reduzierung der Schadstoffmenge in Abgasen, insbesondere zur Reduzierung der Stickoxidmenge im Rauchgas eines Kohlekraftwerks, mit folgenden Schritten:
- Einbringen des Abgases in einen Katalysator dem eine katalytische Reduktionsmittelmenge zugeführt wird;
- Messen der Schadstoffmenge am Austritt des Katalysators;
- Einstellen der Schadstoffmenge auf einen Sollwert kleiner als ein einzuhaltender Grenzwert, indem die zugeführte Reduktionsmittelmenge variiert wird; wobei die Einstellung der Schadstoffmenge in Abhängigkeit von regelmäßig ermittelten zeitlichen Mittelwerten, wie z.B. Halbstunden- oder Viertelstundenmittelwerte, der gemessenen Schadstoffmenge dynamisch geregelt wird.

## Beschreibung

Die Erfindung betrifft ein Verfahren und eine Vorrichtung zur Reduzierung der Schadstoffmenge in Abgasen, insbesondere zur Reduzierung der Stickoxidmenge im Rauchgas eines Kohlekraftwerks gemäß Anspruch 1 und 7.

Bei der Kohleverstromung in Kraftwerken bilden sich Rauchgase, die neben Aschepartikeln und anderen Schadstoffen auch schädliche Stickoxide (NOx) enthalten. Damit die gesetzlich vorgeschriebenen Grenzwerte eingehalten werden, müssen in Kraftwerksanlagen entsprechende Maßnahmen zur Reduktion der Schadstoffmenge im Abgas vorgesehen werden.

So wird beispielsweise bei Kohlekraftwerken zur Einhaltung der vorgeschriebenen NOx-Werte häufig das sogenannte SCR-(selektive katalytische Reduktion) Verfahren eingesetzt. Dabei wird Ammoniak (NH3) als Reduktionsprodukt in den Rauchgasstrom eingedüst und dieses Gemisch dann über einen Katalysator geleitet. Im Katalysator entsteht daraus Stickstoff und Wasserdampf. Durch diese katalytische Reaktion vermindert sich die NOx-Konzentration im Rauchgas. Die NOx-Werte werden dabei in der Anlage an zuvor behördlich genehmigten Emissionsmessstellen gemessen. Anschließend werden daraus in einem Emissionsrechner (EMI-Rechner) die Halbstundenmittelwerte und Tagesmittelwerte errechnet, registriert und an die zuständigen Behörden zur Auswertung weitergeleitet.

Die NOx-Werte werden dabei häufig am Austritt des Katalysators gemessen, da hier aus regelungstechnischen Gründen die beste Regelgüte erreicht werden kann. Anlagenbedingt kann es aber zu unterschiedlichen NOx-Werten am Austritt des Katalysators (Messstelle) und am eigentlichen Kaminaustritt (zu beachtende Emissionswerte) kommen. Damit ist nicht nur der Messort unterschiedlich, sondern in aller Regel auch die Qualität der Messung. Die behördliche Messung muss regelmäßig kalibriert und geeicht werden, die eigentliche Regelgröße dagegen nicht, was zusätzlich zu abweichenden Ergebnissen führen kann.

Um die vom Gesetzgeber vorgeschriebenen Emissionswerte sicher einhalten zu können, muss ein Anlagefahrer dies somit auch bei der Einstellung des Schadstoffsollwertes, hier des NOx― Sollwerts, an der Messstelle berücksichtigen. Zudem kann es tages- und lastabhängig zu Schwankungen des NOx-Ausstoßes kommen, so dass der Anlagenfahrer in aller Regel einen größeren Sicherheitsabstand des Sollwertes vom zulässigen Grenzwert wählen wird. Um die Anlage immer im optimalen Betriebsbereich zu fahren, muss der Anlagefahrer somit abhängig von den momentan gemessenen Werten den Sollwert ständig anpassen. Dies geschah bisher immer manuell. Ein nicht optimaler Betrieb der Anlage, bzw. ein zu großer Sicherheitsabstand des eingestellten Sollwertes vom gesetzlich zulässigen Grenzwert führt zudem zu einem höheren Verbrauch von Ammoniak NH3.

Aufgabe der Erfindung ist es, ein Verfahren sowie eine Vorrichtung zur Reduzierung der Schadstoffmenge in Abgasen bereit zu stellen, um die zuvor beschriebenen Nachteile zu überwinden.

Diese Aufgabe wird mit dem Verfahren zur Reduzierung der Schadstoffmenge in Abgasen, insbesondere zur Reduzierung der Stickoxidmenge im Rauchgas eines Kohlekraftwerks mit den Merkmalen des Anspruchs 1, sowie der entsprechenden Vorrichtung nach Anspruch 7 gelöst.

Dadurch, dass das Abgas in einen Katalysator, dem eine katalytische Reduktionsmittelmenge zugeführt wird, eingebracht wird, die Schadstoffmenge am Austritt des Katalysators gemessen wird, die Schadstoffmenge auf einen Sollwert kleiner als ein einzuhaltender Grenzwert eingestellt wird, indem die zugeführte Reduktionsmittelmenge variiert wird, und die Einstellung der Schadstoffmenge in Abhängigkeit von zuvor regelmäßig ermittelten zeitlichen Mittelwerten, vorzugsweise den von einem Emissionsrechner ermittelten Halbstundenmittel-oder Viertelstundenmittelwerten, der gemessenen Schadstoffmenge dynamisch geregelt wird, kann eine zeitnahe Anpassung des Schadstoffsollwertes an die momentan vorliegenden Schadstoffwerte erfolgen und somit letztendlich der Abstand zwischen Sollwert und zulässigem Grenzwert verringert werden. Insbesondere bei Kohlekraftwerken können so die vorgeschriebenen NOx-Grenzwerte durch eine solche automatische Nachregelung des NOx-Sollwertes auch bei geringerem Abstand vom festgeschriebenen Grenzwert sicher eingehalten werden und gleichzeitig kann die Menge des Reduktionsmittels Ammoniak verringert werden.

Wird bei der Regelung zudem der aufgelaufene Tagesmittelwert berücksichtigt, der auf Basis einer Anzahl von während des Tages bereits ermittelten Halbstunden- oder Viertelstundenmittelwerten oder sonstiger regelmäßig ermittelter Mittelwerte berechnet wird, kann der Sollwert für die Regelung so angepasst werden, dass der zulässige Tagesmittelwert genaustens eingeregelt wird. Dies hat den Vorteil, dass der Anlagenfahrer entlastet wird, und zudem der Verbrauch an katalytischem Reduktionsmittel auf ein Minimum optimiert wird.

Wird zusätzlich die Anzahl der während des Tages regelmäßig ermittelten Mittelwerte berücksichtigt, ergibt sich eine sehr einfache selbstkorrigierende Regelung über den gesamten Tagesverlauf.

Wird bei der Regelung der aktuell eingestellte Sollwert berücksichtigt, können noch kleinere iterative Annäherungen an den einzuhaltenden Grenzwert erreicht werden.

Ein entsprechend dem erfindungsgemäßen Verfahren ausgebildeter Regler bildet somit das Übertragungsverhalten eines Emissionsrechners nach und errechnet aufgrund der ermittelten zeitlichen Mittelwerte (hier insbesondere die Halbstunden- bzw. Viertelstundenmittelwerte) und/oder aktuell eingestelltem Sollwert und/oder aufgelaufenem Tagesmittelwert und/oder Anzahl der während eines Tages regelmäßig ermittelten Mittelwerte, einen einzustellenden Sollwert möglichst nahe an einem einzuhaltenden Grenzwert, der dann vom Regler in der Vorrichtung zur Regelung der Stickoxidmenge im Rauchgas herangezogen wird.

Die Erfindung soll nun anhand der nachfolgenden Figuren beispielhaft erläutert werden. Es zeigen:
- FIG 1: schematisch eine erfindungsgemäße Reglerstruktur,
- FIG 2: schematisch eine weitere erfindungsgemäße Ausführungsform eines in den Abgaspfad eingebundenen Modellreglers.

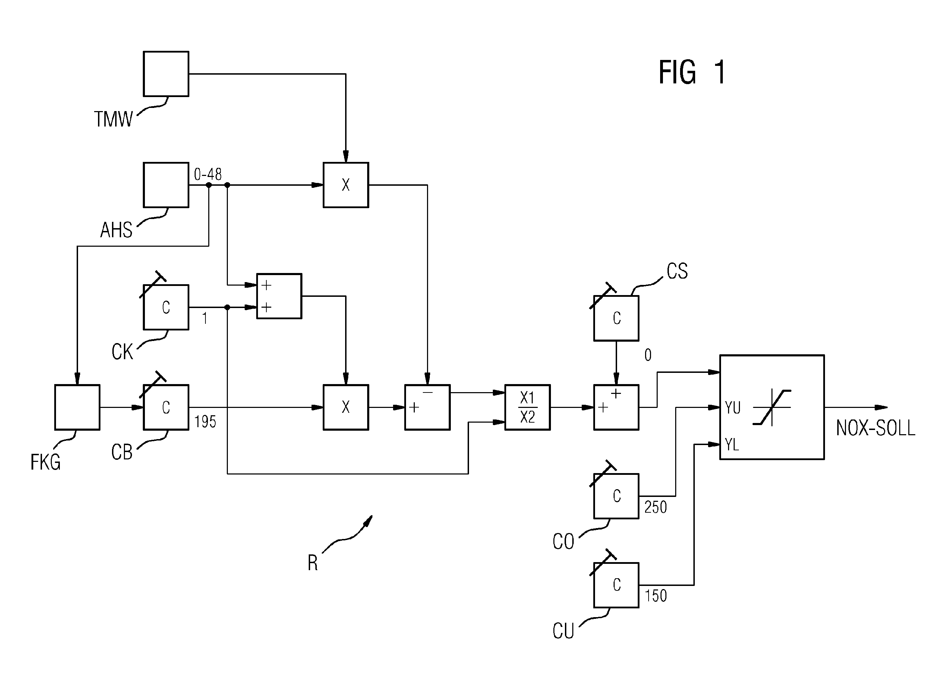

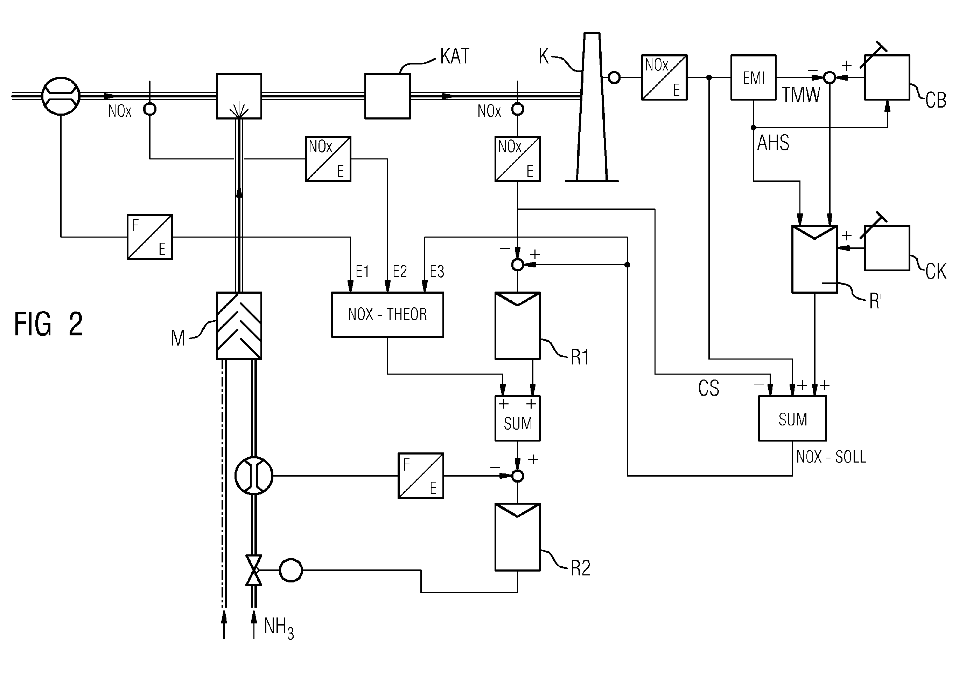

In der FIG 1 schematisch dargestellt ist der Regler R zur Umsetzung der erfindungsgemäßen Verfahrensschritte, hier am Beispiel der Einstellung des NOX-Sollwerts "NOX-SOLL" im Rauchgas eines Kohlekraftwerks auf einen zulässigen Tagesmittelgrenzwert von 200 mg/Nm³. Nachdem das Kraftwerk angefahren ist, muss zuerst eine gewisse Rauchgastemperatur erreicht werden, bevor erstmalig die NOx- Regelung freigegeben werden kann, da bei niedrigen Temperaturen der Katalysator durch andere Schadstoffe wie beispielsweise NH3 vergiftet wird. In dieser Anfahrphase wird bei sonst fehlerfreiem Betrieb (NH3-Versorgung, Pumpen, Filter, etc. in Ordnung) der Betriebssollwert CB zuerst noch in Abhängigkeit der Anzahl der Halbstundenmittelwerte AHS geführt. Der Betriebssollwert CB wird dabei über das Stellglied FKG von einem Anfangswert, der sicher unterhalb des Grenzwertes liegt, in Abhängigkeit der Anzahl der aufgelaufenen Halbstundenmittelwerte AHS und damit immer stabiler werdender Regelung auf einen einstellbaren Zielwert für diesen Betriebssollwert CB von hier 195 mg/Nm³ angehoben. Optional kann ein Schlupfparameter CS fest eingestellt werden oder, wie später in FIG 2 dargestellt, direkt aus den NOx Messungen abgeleitet werden. Somit lässt sich ein möglicher Unterschied zwischen dem geregelten NOx-Wert und der gesetzlichen zu beachtenden Wert korrigieren.

Die obere Logik des in FIG 1 dargestellten Regelplans zeigt die eigentliche Regelung der Schadstoffmenge, hier anhand des aufgelaufenen Tagesmittelwertes TMW. Die Korrekturzeit ist dabei die Anzahl der Halbstundenmittelwerte AHS in denen korrigiert und damit nachgeregelt werden soll. In diesem Beispiel beträgt die Korrekturzeit CK = 1, das heißt die Abweichung des Tagesmittelwertes TMW soll nach jeder nächsten Halbstunde korrigiert werden. Die Anzahl der aufgelaufenen Halbstundenmittelwerte AHS wird dazu benutzt, die Korrektur zu faktorisieren, d.h. die Korrektur greift dabei umso stärker ein, je mehr Halbstundenmittelwerte im Tagesmittelwert enthalten sind. Im Extremfall erhält man so bei bereits 47 aufgelaufenen Halbstundenmittelwerten nur noch eine halbe Stunde Zeit, um den Fehler zu korrigieren, da ein Tag ja nur maximal 48 Halbstundenwerte haben kann. Zum sicheren Betrieb der Kraftwerksanlage wird die Regelung hier optional auf einen Bereich innerhalb der einstellbaren Grenzen von CU=150mg/Nm³ bis CO=250mg/Nm³ begrenzt.

In FIG 2 dargestellt ist ein in den Abgaspfad NOx eines Kraftwerks mit Kamin K eingebundener Modellregler R' in einer weiteren erfindungsgemäßen Ausbildung. Tagesmittelwert TMW und Anzahl der Halbstundenmittelwerte AHS kommt aus dem EMI-Rechner, der sich am Kamin K befindet. Aus den Eingangswerten, Anzahl der Halbstundenmittelwerte AHS, Betriebssollwert CB, Korrekturzeit CK und aufgelaufener Tagesmittelwert TMW bildet der Modellregler R' den theoretischen Sollwert. Dieser theoretische Sollwert bildet zusammen mit dem Schlupfparameter CS, der aus dem Abgaswert vor dem Kamin K und dem Abgaswert im Kamin ermittelt wird, den einzustellenden Sollwert "NOX-Soll". Dieser Wert wird auf einen Regler R1 geschaltet, der die NOx-Menge hinter dem Katalysator KAT regeln soll. Der Regler R1 gibt dann einen NH3-Mengensollwert, der sich aus der Regelgröße des Reglers R1 und einem theoretischen NOx Wert (NOX THEOR) zusammensetzt, an den unterlagerten Mengenregler R2 aus, der wiederum die ausgewählte NH3 Menge freigibt. Diese wird im Mischer M noch mit Luft gemischt und anschließend in den Abgaspfad vor dem Katalysator KAT eingedüst. So ergibt sich ein geschlossener Regelkreislauf zur automatischen Nachregelung der Schadstoffmenge möglichst nahe an dem gesetzlich vorgeschriebenen Höchstwert.

## Patentansprüche

1. Verfahren zur Reduzierung der Schadstoffmenge in Abgasen, insbesondere zur Reduzierung einer Stickoxidmenge im Rauchgas eines Kohlekraftwerks, mit folgenden Schritten:
- Einbringen des Abgases in einen Katalysator dem eine katalytische Reduktionsmittelmenge zugeführt wird;
- Messen der Schadstoffmenge am Austritt des Katalysators;
- Einstellen der Schadstoffmenge auf einen Sollwert kleiner als ein einzuhaltender Grenzwert, indem die zugeführte Reduktionsmittelmenge variiert wird;
**dadurch gekennzeichnet, dass** die Einstellung der Schadstoffmenge in Abhängigkeit von zuvor regelmäßig ermittelten zeitlichen Mittelwerten der gemessenen Schadstoffmenge dynamisch geregelt wird.

2. Verfahren nach Anspruch 1,
**dadurch gekennzeichnet, dass** die Regelung einen aufgelaufenen Tagesmittelwert berücksichtigt, der auf Basis einer Anzahl von während des Tages bereits ermittelten zeitlichen Mittelwerten berechnet wird.

3. Verfahren nach Anspruch 2,
**dadurch gekennzeichnet, dass** die Regelung zudem die Anzahl der während eines Tages ermittelten zeitlichen Mittelwerte berücksichtigt.

4. Verfahren nach einem der Ansprüche 1 bis 3, **dadurch gekennzeichnet, dass** die Regelung den aktuell eingestellten Sollwert berücksichtigt.

5. Verfahren nach einem der Ansprüche 1 bis 4
**dadurch gekennzeichnet, dass** der Schadstoff Stickoxid im Rauchgas und das zugeführte katalytische Reduktionsmittel Ammoniak ist.

6. Verfahren nach einem der Ansprüche 1 bis 5 **dadurch gekennzeichnet, dass** die zeitlichen Mittelwerten von einem EMI Rechner ermittelt werden und Halbstunden- oder Viertelstundenmittelwerte sind.

7. Vorrichtung zur Regelung der Schadstoffmenge in Abgasen mit einem Regler (R, R') der unter Verwendung des Verfahrens nach einem der Ansprüche 1 bis 5 aus ermittelten zeitlichen Mittelwerten (TMW) und/oder aktuell eingestelltem Sollwert und/oder aufgelaufenem Tagesmittelwert und/oder Anzahl der während eines Tages ermittelten zeitlichen Mittelwerte (AHS), eine einzustellende Schadstoffmengen (NOX-SOLL) möglichst nahe an einem einzuhaltenden Grenzwert ermittelt und einstellt.

8. Vorrichtung nach Anspruch 7
**dadurch gekennzeichnet, dass** die regelmäßig ermittelten zeitlichen Mittelwerte, Halbstunden- oder Viertelstundenmittelwerte sind, die von einem Emissionsrechner (EMI) ermittelt werden.
